# EUROPEAN PATENT APPLICATION

(11) **EP 4 841 238 A1**
(43) Date of publication of application: **18.11.2026**
(21) Application number: 25738909.8
(22) Date of filing: 07.01.2025
(51) Int. Cl.: G01N 19/04, H01M 50/46

(54) **PORTABLE ADHESIVE FORCE MEASURING INSTRUMENT**

(30) Priority: 10.01.2024 KR 20240004020
(71) Applicant: LG Energy Solution, Ltd., Seoul 07335 (KR)
(72) Inventor: JUNG, Jun Ki, Daejeon 34122 (KR); HA, Hun Young, Daejeon 34122 (KR); KIM, Sang Bin, Daejeon 34122 (KR)
(74) Representative: Goddar, Heinz J.
(86) International application number: PCT/KR2025/000302
(87) International publication number: WO 2025/150835

(57) **Abstract**

The present invention relates to a device for testing adhesive force of a secondary battery cell, and more specifically, relates to a portable adhesive force measuring device for quantitatively testing adhesive force of a cell in a production line, and a system thereof.

According to one example of the present invention, it can provide a potable adhesive force measuring device comprising: a case in which a cover is provided and an accommodating space is formed therein; a base plate provided inside the case and exposed to the outside in a state where the cover is opened; a specimen seating table provided on one side of the base plate and protruding from the base plate at a predetermined height to fix a specimen for adhesive force measurement; a linear moving table provided on the table in a straight line with the specimen seating part; an adhesive force gauge having a clamp connected to the separator of the specimen and mounted on the linear moving table to acquire adhesive force data while moving linearly; and an interface screen controlling movement of the linear moving table, and a system thereof.

## Description

### Technical Field

The present invention relates to a device for testing adhesive force of a secondary battery cell, and more specifically, relates to a portable adhesive force measuring device for quantitatively testing adhesive force of a cell in a production line, and a system thereof.

This application claims the benefit of priority based on Korean Patent Application No. 10-2024-0004020 dated January 10, 2024, the disclosure of which is incorporated herein by reference in its entirety.

### Background Art

Secondary batteries capable of charging and discharging have recently been widely used in various devices. Secondary batteries attract attention as an eco-friendly energy source capable of reducing air pollution, and the like, especially from existing vehicles, and the like, using fossil fuels.

Secondary batteries can be classified into lithium-ion batteries, lithium-ion polymer batteries, and the like, depending on constitutions of electrodes and electrolytes, and can be classified into rectangular batteries, pouch-type batteries, and cylindrical batteries, and the like, depending on shapes of battery cases.

An electrode assembly built into the battery case has a structure consisting of a positive electrode, a negative electrode, and a separator interposed between the positive electrode and the negative electrode, which can be referred to as a power generation element capable of charging and discharging. The electrode assembly can be classified into a jelly roll type in which the separator is interposed between long sheet-shaped positive and negative electrodes coated with active materials, and a stack type in which multiple positive and negative electrodes are sequentially stacked in a state where the separators are interposed.

In the case of a stack-type secondary battery, it can be manufactured by laminating individual positive electrodes, negative electrodes, and separators one by one, and can also be manufactured by laminating semifinished cells.

A semi-product can be formed by laminating a separator, a positive electrode, a separator, and a negative electrode, which can be called a mono-cell. A semi-product can be formed by laminating a separator, a positive electrode, and a separator, which can be called a half-cell. The mono-cell can be formed by lamination, and the half-cell can be formed by laminating a separator, a negative electrode, and a separator. Of course, the lamination order and number of laminations in the semi-product can be different.

An electrode assembly, which is a finished product, can be finally manufactured by laminating mono-cells, which are multiple semifinished products, and then laminating a half-cell, which is a semifinished product, at last.

In the manufacture of these semifinished products, the adhesive force between the separator and the negative electrode, the separator and the positive electrode, and the separator and the separator can be regarded as one of important quality factors.

However, there is a problem that it is difficult to determine the degree and level of this adhesive force on the production line, whereby visual inspection has been mainly performed. Therefore, quantitative values cannot be measured. Of course, to measure the adhesive force, it is inevitable to move the semifinished product to a place such as a laboratory equipped with UTM (universal testing machine) equipment, rather than the production line, to measure its adhesive force. Therefore, excessive time and cost are inevitably involved in the movement and measurement process.

In addition, the UTM equipment can be regarded as the equipment that the original intended use is not for adhesive force measurement, but for tensile strength measurement of materials, and the like. Therefore, the UTM equipment is not suitable for adhesive force measurement, thereby having a problem of low measurement reproducibility.

### Disclosure

### Technical Problem

Through one example of the present invention, it is intended to provide a portable adhesive force measuring device capable of quantitatively measuring adhesive force of a semifinished product in a production line, and a system thereof.

Through one example of the present invention, it is intended to provide a portable adhesive force measuring device, which is formed in a box shape for easy storage and portability, and a system thereof.

Through one example of the present invention, it is intended to provide a portable adhesive force measuring device capable of easily performing adhesive force measurement and analysis in a production line site, and a system thereof.

Through one example of the present invention, it is intended to provide a portable adhesive force measuring device capable of providing an optimized user interface, and a system thereof.

Through one example of the present invention, it is intended to provide a portable adhesive force measuring device capable of easily producing control logics by using a general adhesive force gauge and controlling linear movement of the adhesive force gauge, and a system thereof.

### Technical Solution

To achieve the above-described objects, according to one example of the present invention, it may provide a portable adhesive force measuring device for measuring adhesive force of an electrode and a separator of a secondary battery.

The portable adhesive force measuring device may comprise a case in which a cover is provided and an accommodating space is formed therein; a base plate provided inside the case and exposed to the outside in a state where the cover is opened; a specimen seating table provided on one side of the base plate and protruding from the base plate at a predetermined height to fix a specimen for adhesive force measurement; a linear moving table provided on the table in a straight line with the specimen seating part; an adhesive force gauge having a clamp connected to the separator of the specimen and mounted on the linear moving table to acquire adhesive force data while moving linearly; and an interface screen controlling movement of the linear moving table.

Therefore, if a worker opens the cover to use the portable adhesive force measuring device, all components that the worker must operate and visually check may be exposed to the outside from the upper part of the base plate.

It is preferable that it comprises a gauge seating plate that is movably provided on the linear moving table and on which the adhesive force gauge is mounted. It is preferable that the adhesive force gauge mounted on the gauge seating plate is moved integrally with the gauge seating plate.

It is preferable that the linear moving table and the specimen seating table have a protrusion height determined relative to the base plate so that the clamp of the mounted adhesive force gauge and the specimen are horizontal. Through this, the separator may be linearly pulled and peeled off substantially horizontally.

It is preferable that the adhesive force gauge is linearly moved by linear movement of the gauge seating plate with respect to the linear moving table.

It is preferable that the adhesive force gauge is provided to output adhesive force strengths measured at a preset time interval.

It is preferable that the data output from the adhesive force gauge are transmitted to an external terminal via a connection line.

On the interface screen, an origin movement menu of the adhesive force gauge; a start position menu indicating that the adhesive force gauge is at a start position; and an end position menu indicating that the adhesive force measuring device moves to be at an end position where it ends measurement may be displayed.

It is preferable that when the origin movement menu is input, the adhesive force gauge is moved to an origin position.

It is preferable that the adhesive force gauge is moved to the origin position, and then sequentially moved to a standby position and the start position.

It is preferable that when the end position menu is input after the adhesive force gauge is moved to the start position, the adhesive force gauge moves linearly at a constant speed to the end position.

Therefore, the worker can easily perform operation confirmations and operation commands of a servo motor by checking whether the menus are activated and inputting the menu.

To implement the above-described objects, according to one example of the present invention, it may provide a portable adhesive force measurement system. The portable adhesive force measurement system may comprise the above-described portable adhesive force measuring device and an external terminal.

The portable adhesive force measurement system may comprise: a case in which a cover is provided and an accommodating space is formed therein; a base plate provided inside the case and exposed to the outside in a state where the cover is opened; a specimen seating table provided on one side of the base plate and protruding from the base plate at a predetermined height to fix a specimen for adhesive force measurement; a linear moving table provided on the table in a straight line with the specimen seating part; an adhesive force gauge having a clamp connected to the separator of the specimen and mounted on the linear moving table to acquire adhesive force data while moving linearly; an interface screen controlling movement of the linear moving table; and an external terminal connected to the adhesive force gauge for communication and provided so that adhesive force data output from the adhesive gauge are collected and analyzed.

The external terminal may be provided to be integrally fixed to the case. That is, it may be a partial constitution which is mounted on the case or the base plate, like the interface screen. Particularly, the external terminal may be mounted on the lower surface of the cover. Therefore, when the cover is opened to be in a 90-degree standing position, the external terminal may be exposed to the outside and erected at 90 degrees as well.

However, the external terminal is a general-purpose PC, and more preferably, it is a tablet PC. In this case, the cover needs to be arranged with a horizontal protrusion so that the external terminal can be erected and fixed.

It is preferable that the adhesive force gauge and the external terminal are connected via a connection line. For adhesive force measurement, the external terminal and the adhesive force gauge may be connected via a connection line, and if not, the external terminal and the adhesive force gauge may be separated.

It is preferable that it comprises a gauge seating table that is provided on the linear moving table to be linearly movable and on which the adhesive force gauge is mounted.

It is preferable that it comprises a servo motor driven for back-and-forth linear movement of the gauge seating table at one end of the linear moving table.

It is preferable that a PLC control part for control and power source application of the servo motor and the interface screen is located at the lower part of the base plate. It is preferable that the PLC control part is provided to receive an external power source.

It is preferable that the adhesive force gauge receives a power source from the external terminal through the connection line. Therefore, like the external terminal, the adhesive force gauge may also be employed as a general adhesive force gauge.

It is preferable that the servo motor is driven so that the gauge seating table linearly moves at a preset constant speed, and the adhesive force gauge is provided to output adhesive force strengths measured at a preset time interval.

It is preferable that the external terminal is a tablet PC, and a seating protrusion, in which the external terminal can be supported in a state where the cover is completely opened, is formed on the cover.

It is preferable that after inputting execution of adhesive force collection software installed on the external terminal and data collection start, the data are recorded in the external terminal.

It is preferable that after inputting data collection end of the adhesive force collection software installed on the external terminal, the data recording is ended in the external terminal.

It is preferable that a graph of the adhesive force strengths for the location of the separator is generated and displayed based on the collected data through execution of adhesive force analysis software installed on the external terminal.

Therefore, the adhesive force collection and analysis can be easily performed at the production site, and such analysis results can be immediately reflected in the production site.

### Advantageous Effects

Through one example of the present invention, it is possible to provide a portable adhesive force measuring device capable of quantitatively measuring adhesive force of a semifinished product in a production line, and a system thereof.

Through one example of the present invention, it is possible to provide a portable adhesive force measuring device, which is formed in a box shape for easy storage and portability, and a system thereof.

Through one example of the present invention, it is possible to provide a portable adhesive force measuring device capable of easily performing adhesive force measurement and analysis in a production line site, and a system thereof.

Through one example of the present invention, it is possible to provide a portable adhesive force measuring device capable of providing an optimized user interface, and a system thereof.

Through one example of the present invention, it is possible to provide a portable adhesive force measuring device capable of easily producing control logics by using a general adhesive force gauge and controlling linear movement of the adhesive force gauge, and a system thereof.

### Description of Drawings

Figure 1 illustrates a portable adhesive force measuring device according to one example of the present invention,
Figure 2 illustrates an appearance of an adhesive force gauge at a start position,
Figure 3 illustrates an appearance of an adhesive force gauge at an end position,
Figure 4 illustrates a constitution of a specimen seating table, and a specimen seating and fixing structure,
Figure 5 illustrates one example of a specimen production sequence,
Figure 6 illustrates a control flow of a portable adhesive force measuring device according to one example of the present invention,
Figure 7 illustrates a table of measured adhesive force strengths and one example of a graph, and
Figure 8 illustrates one example of an interface screen of a portable adhesive force measuring device according to one example of the present invention.

### Best Mode

Hereinafter, a portable adhesive force measuring device according to one example of the present invention will be described in detail with reference to the attached drawings.

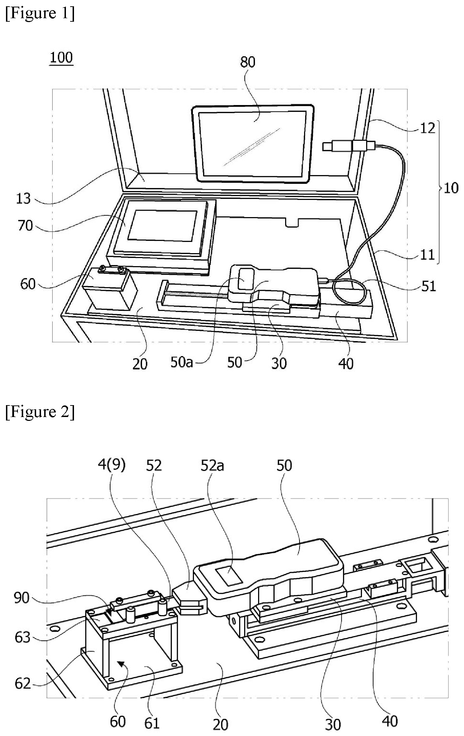

Figure 1 illustrates one example of a portable adhesive force measuring device.

A portable adhesive force measuring device (100) comprises a case (10). The case (10) comprises a main body (11) and a cover (12), where the portable adhesive force measuring device (100) may be used by opening the cover (12) in a state where the main body (11) is kept horizontally on the ground.

In a state where the cover (12) is closed, the case (10) performs a function of storing internal components. That is, an accommodation space is formed inside the case.

A base plate (20) may be provided inside the case. The base plate (20) is a constitution for mounting components for measuring adhesive force, which may be exposed to the outside in a state where the cover is opened. That is, the components provided on the base plate (20) may be exposed to the outside.

In addition, the base plate (20) may perform a function of dividing the space inside the main body (11) up and down. That is, the upper part of the base plate (20) may be provided with components for direct manipulation by a worker, and the lower part of the base plate (20) may be provided with a control part such as a PLC (programmable logic controller), a power supply device, and other control components.

The case (10) may be mounted on a moving device such as a carrier or a cart, and through this, the worker may easily move the portable adhesive force measuring device (100).

A specimen seating table (60) may be provided on one side of the upper surface of the base plate (20). A specimen for adhesive force measurement may be mounted and fixed on the specimen seating table (60). Details about the specimen will be described below.

A linear moving table (40) may be provided on the other side of the upper surface of the base plate (20). The linear moving table (40) is preferably positioned in a straight line with the specimen seating table (60).

The specimen seating table (60) and the linear moving table (40) are preferably positioned in the front of the base plate (20).

An interface screen (70) is preferably provided on the rear of the upper surface of the specimen seating table (60). The interface screen may be a constitution that a worker operates to measure the adhesive force. The worker may control the operation of the linear moving table using the interface screen. In addition, the interface screen may be a constitution to display the current state to the worker during the adhesive force measurement process.

An adhesive force gauge (50) may be mounted on the linear moving table (40). The adhesive force gauge (50) has a clamp connected to the separator of the specimen, which may measure the adhesive force between the separator and the electrode as the adhesive force gauge (50) linearly moves. As described below, the position where peeling of the separator starts and the position of the clamp are located opposite to each other based on the specimen, so that a connection membrane may be interposed between the separator and the clamp.

Specifically, the linear moving table (40) is provided with a gauge seating plate (30), and the gauge seating plate (30) may be provided to move linearly with respect to the linear moving table (40). The gauge seating plate (30) may be moved linearly with respect to the linear moving table (40) by operation of a linear servo motor.

The adhesive force gauge (50) may be mounted on the upper surface of the gauge seating plate (30). Therefore, the gauge seating plate (30) and the adhesive force gauge (50) may be linearly moved integrally.

The adhesive force gauge (50) may comprise a connection line (51). The adhesive force gauge (50) may collect adhesive force data, and transmit the collected data to the external terminal (80) through the connection line (51).

It is preferable that the external terminal (80) is installed with data collection software and data analysis software. In a state where the data collection software is executed, the external terminal (80) may receive and record adhesive force data from the adhesive force gauge (50). That is, the resistance force when the separator is peeled off as the adhesive force gauge (50) moves linearly may be measured, and this resistance force may be measured as adhesive force.

Here, the adhesive force data may be measured as adhesive force for displacement. The displacement means the position where the separator is peeled off in the sample, and the adhesive force at that position may be measured. The displacement may be calculated arithmetically. That is, the displacement of the position of the adhesive force gauge may be calculated as the displacement of the position where the separator is peeled off. Therefore, it is preferable that the adhesive force gauge is controlled to move linearly at a constant speed.

After the data collection is completed through the external terminal (80), the data analysis software may be executed on the external terminal (80) to analyze the collected adhesive force data.

The external terminal (80) may be an external PC, but it is preferably a tablet PC for facilitating portability.

A certain internal space may also be provided inside the cover (12), and to this end, the cover (12) may be provided to have a certain height. Here, the cover (12) may be provided to be opened while rotating by 90 degrees to less than 100 degrees. In a state where the cover (12) is completely opened, a horizontal protrusion (13) may be formed on the cover (12). Therefore, the external terminal (80) may be temporarily erected and fixed using the horizontal protrusion (13).

The worker may store and carry the portable adhesive force measuring device and the external terminal (80) individually, and may easily perform adhesive force measurement and analysis by connecting the external terminal (80) and the adhesive force gauge (50) with a wire when measuring adhesive force.

Of course, the portable adhesive force measuring device according to one example of the present invention may comprise not only the interface screen (70) but also the terminal integrally. However, since it is more economical for the terminal to perform other functions as well as simply collecting and analyzing adhesive force data, it is preferable that the adhesive force gauge (50) and the connection line (51) are the components of the adhesive force measuring device, and the external terminal (80) is provided to be used for general purposes as well as for adhesive force measurement.

Therefore, in the present example, the external terminal and the adhesive force gauge are not constitutions which are usable only in the present example, and a general-purpose tablet PC and a tensile force measuring gauge may be used. Through this, a portable adhesive force measuring device and a system thereof can be manufactured and used very easily and economically.

The adhesive force gauge (50) is provided with a display (50a), and the operating status of the adhesive force gauge may be displayed on the display (50a). In addition, the zero point may be set through the display (50a) or a separate button.

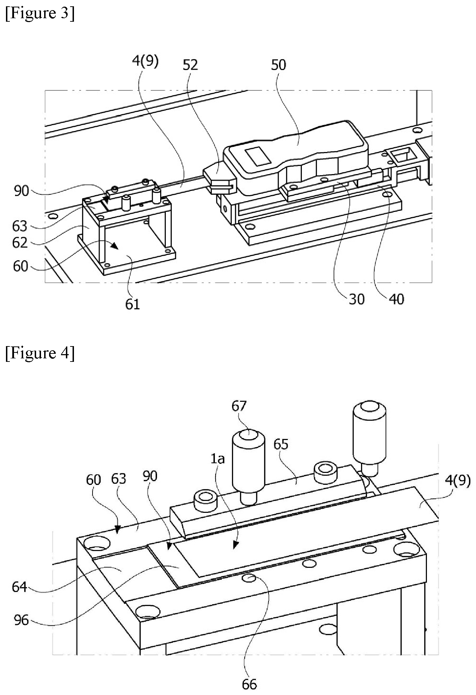

Hereinafter, the positions of the adhesive force gauge before and after the adhesive force measurement will be described in detail with reference to Figures 2 and 3. Figure 2 shows an appearance before adhesive force measurement, and Figure 3 shows an appearance of adhesive force measurement completion.

First, a specimen may be prepared for adhesive force measurement, and the prepared specimen may be mounted on a specimen seating table (60). The specimen seating table (60) may comprise a lower plate (61), a support frame (62), and an upper plate (63). The lower plate (61) may be mounted on a base plate (20), and the upper plate (63) may be provided on the upper part of the lower plate (61) to be spaced apart by a predetermined distance. The support frame (62) may be provided between the lower plate (61) and the upper plate (63). The support frame (62) may be provided to support both sides of the upper plate (63).

The specimen (90) may be fixed to the upper plate (63), and one end of the separator (92) located on the upper surface of the specimen may be combined with the clamp (52). Specifically, it is preferable that one end of the separator is combined with the clamp through the connection membrane.

Since the specimen seating table (60) is positioned to protrude to the upper part of the base plate (20), the worker may easily mount the specimen on the specimen seating table (60). In addition, since the clamp (52) and the adhesive force gauge (50) are positioned to protrude to the upper part of the base plate (20) through the linear moving table (40), the worker may easily combine the separator of the specimen with the clamp.

Here, the separator (4) is bonded to the upper surface of the electrode, where the separator (4) may be separated from the electrode while pulling the separator (4). That is, the separator may be peeled off from the electrode, and the resistance force generated at this time may be referred to as the adhesive force between the electrode and the separator.

Meanwhile, in the specimen (90), the separator (4) may not protrude or may have a very short protrusion length. Therefore, to connect the separator (4) to the clamp (52), the separator must protrude by a predetermined length or more. That is, the separator must protrude relatively with respect to the electrode. This is because a part of the separator must be inserted into the inside of the clamp (52) and the electrode must not be combined to the clamp (52).

In addition, as shown in Figures 2 and 3, for separation of the separator (4), the left end of the separator must be held and pulled to the right. In this case, the clamp (52) and the separator (4) are not located on the same plane. Therefore, it is preferable that the specimen (90) is provided with a connection membrane (9) that is connected to the left end of the separator and combined to the clamp (52).

That is, it is preferable that the connection membrane (9) is interposed between one end of the separator (4) (the end of the part that is initially peeled off) and the clamp (52). The connection membrane (9) may be connected to one end of the separator (4) and may be provided to be extended past the other end (the end of the part that is finally peeled off) of the separator (4) to the clamp (52).

The clamp (52) is provided on the adhesive force gauge (50), and as the adhesive force gauge (50) moves linearly at a constant speed, the clamp (52) pulls the separator (4) through the connection membrane (9). The resistance force generated as the separator is peeled off from the electrode is measured by the adhesive force gauge (50) through the clamp (52), and this resistance force may be referred to as the adhesive force. Here, since the adhesive force gauge (50) moves linearly at a constant speed, the peeling position may be calculated linearly over time, and the adhesive force at the relevant position may be measured.

As shown in Figure 3, the adhesive force gauge (50) moves linearly in a direction away from the specimen seating table (60), and accordingly, the separator (4) is peeled off. When the adhesive force gauge (50) completely moves by a preset distance, the adhesive force measurement may be terminated.

Hereinafter, the structure in which the specimen (90) is mounted on the specimen seating table (60) will be described in more detail with reference to Figure 4.

The specimen (90) may comprise a slide glass (96) and a sample (1a) of a semifinished product (1) attached on the slide glass (96). The semifinished product sample (1a) may comprise a separator (4).

A groove (64) in which the slide glass (96) is mounted may be provided on the upper plate (63) of the specimen seating table (60), and the groove (64) may be formed so that at least a portion of the slide glass (96) may be inserted from the top to the bottom.

A guide block (65) for guiding insertion and mounting of the slide glass (96) may be provided on one side of the groove (64), and a fastening hole (66) may be formed on the other side of the groove (64). In the slide glass (96) inserted into the groove (64), one side may be fixed by the guide block (65) and the other side may be fixed by a fastening member (67) fastened to the fastening hole (66). A plurality of fastening holes (66) and a plurality of fastening members (67) may be provided. The fastening member (67) is provided in the form of a stud bolt, and as the fastening member (67) is fastened to the fastening hole (66), the head of the fastening member (67) presses and simultaneously fixes the slide glass (96). Therefore, during the adhesive force measurement process, the specimen (90) may be firmly fixed to the specimen seating table (60), and only the separator (4) may be peeled off from the sample (1).

The semifinished product sample (1a) attached to the slide glass (96) may be firmly fixed while being horizontal to the adhesive force gauge (50) through the specimen seating table (60).

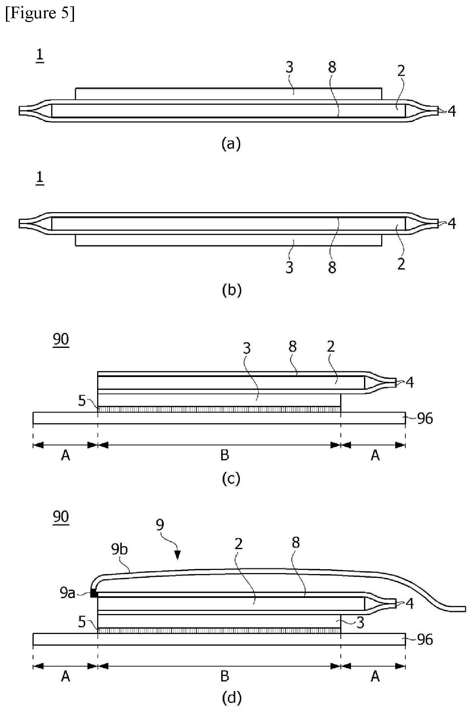

Hereinafter, the process of manufacturing the specimen will be described in detail with reference to Figure 5.

Figure 5(a) illustrates a cross-section of a mono-cell as one example of a semifinished product (1), and specifically illustrates a horizontal section cut in a vertical direction relative to a longitudinal direction of a semifinished product (1).

First, a separator and an electrode for measuring adhesive force in a finished product or semifinished product (1) may be determined. Here, the electrode means a positive electrode and a negative electrode. Since a separator is always interposed between the positive electrode and the negative electrode, the adhesive force between the positive electrode and the separator and the adhesive force between the negative electrode and the separator in the semifinished product can be regarded as very important quality factors. As one example, it can be determined by measuring the adhesive force (8) between the separator (4) and the negative electrode (2) located at the bottom in a semifinished product (1) in which the separator (4), the negative electrode (2), the separator (4), and the positive electrode (3) are sequentially laminated from the bottom. Here, the separators (4) and the separators (4) may be bonded up and down at both ends of the semifinished product (1).

As shown in Figure 5(b), in a state where the semifinished product (1) is turned over, it enables for the separator (4) to be located at the uppermost part and for the negative electrode (2) to be located below it. That is, it can be determined to measure the adhesive force between (8) the uppermost separator (4) and the negative electrode (2) below it based on Figure 5(b). In other words, the semifinished product (1) may be prepared so that the separator to be peeled off is located at the uppermost part.

The separator (4) is generally larger than the positive electrode (3) and the negative electrode (2), and protrudes from the positive electrode (3) and the negative electrode (2). Then, the ends of the protruding separator (4) may be bonded up and down to form a semifinished product (1), especially a mono-cell. As one example, in a semifinished product (1) having a rectangular shape, the separator (4) may be provided to protrude further from the positive electrode (3) and the negative electrode (2) at four sides. That is, it may have a free length at four sides while covering both the positive and negative electrodes. Here, both ends of the up-and-down separators (4) may be closely contacted at both sides where the electrode leads are not provided.

Thereafter, the semifinished product (1) may be cut to a preset size to produce a sample (1a). The horizontal and vertical lengths of the rectangular sample (1a) may be preset. Through the preset horizontal and vertical lengths of the sample (1a), the size of the specimen mounting structure and the linear displacement amount of the adhesive force gauge for adhesive force measurement may be preset.

As one example, a sample (1a) may be produced by cutting a semifinished product (1) to have a horizontal length of 55 mm and a vertical length of 20 mm. In this instance, it is preferable that one end of the semifinished product (1) from which the separator (4) protrudes remains in the sample (1a). That is, the semifinished product (1) is cut horizontally up and down so that the length between the upper and lower sides is 20 mm, and then the left side is cut, whereby it is possible to produce a sample (1a) in a horizontal length of 55 mm and a vertical length of 20 mm having three cut sides. Therefore, it can be regarded that the right side of the sample (91) is in a state where the upper and lower separators (4) are in close contact with each other, and the left side is in a state cut to have a vertical plane. That is, in the rectangular sample (1a), the electrode and the separator may form the same vertical plane at the upper side, lower side, and left side, but the separator may protrude from the electrode at the right side.

The sample (1a) produced through cutting may be attached to a slide glass (96). Here, the slide glass may be manufactured to be approximately 20 mm larger than the horizontal length of the sample, and may be manufactured to be approximately 4 mm larger than the vertical length of the sample.

The sample (1a) may be attached to the slide glass (96) via a double-sided adhesive tape. First, one side of the double-sided adhesive tape (5) may be attached to the slide glass (96), and then the adhesive tape may be cut to fit the size of the sample (91). The adhesive tape is positioned at the center of the slide glass (96). Then, the other side of the double-sided adhesive tape may be exposed by removing the protective film of the adhesive tape, and the sample (1a) may be attached to the other side of the adhesive tape.

As shown in Figure 5(c), the sample (1a) may be attached to both sides of the slide glass (96) to have a clearance distance (A), and the clearance distance may be approximately 10 mm. Then, the up-and-down clearance distances may be approximately 2 mm. Therefore, the slide glass may be manufactured in advance so that the horizontal length is approximately 75 mm and the vertical length is approximately 24 mm.

Based on Figure 5(d), the separator (4) in the sample (1a) is pulled to the right to measure the adhesive force with the negative electrode (2). Therefore, an adhesive force measuring device is provided on the right side of the sample (1a). For this reason, a connection membrane (9) for connecting between the separator (4) and the adhesive force measuring device may be provided. Here, it is preferable that the connection membrane (9) is manufactured in advance to have a length of approximately 75 mm or more so that it can be connected to the clamp across the sample (1a).

The connection membrane (9) may comprise an adhesive tape (9a) and a PET film (9b). The adhesive tape (9a) may connect between the separator (4) and the PET film (9b), and the PET film may be extended to the right and then attached to the clamp of the adhesive force measuring device.

The connection membrane (9) may be formed using a double-sided adhesive tape. After bonding one side end of the double-sided adhesive tape to the lower surface of the end of the separator (4) and bonding the other side end to the upper surface of the end of the separator (4), the double-sided adhesive tape may be folded. In this instance, the protective film of the double-sided adhesive tape forms the upper and lower surfaces of the connection membrane (9). Thereafter, the end of the folded double-sided adhesive tape may be combined with a clamp. Therefore, when the connection membrane (9) is manufactured using the double-sided adhesive tape, the double-sided adhesive tape may be cut to 150 mm or more in advance, folded in half, and used as the connection membrane.

If the manufacture of the specimen (90) is completed by attaching the sample (1a) to the slide glass (96) and connecting the connection membrane (9) to the separator (4), the specimen (90) is seated and fixed to the specimen seating table, and the end of the connection membrane (9) is combined to the clamp, as shown in Figure 2, so that the preparation for the adhesion measurement may be completed.

As shown in Figure 5(c), the positive electrode (3) may be attached to the slide glass, and the upper separator (4) and the negative electrode (2) may be separated manually. Thereafter, it can be known that it is possible to measure the adhesive force between the separator (4) and the positive electrode (3) by similarly connecting the connection membrane (9) to the end of the remaining separator (4).

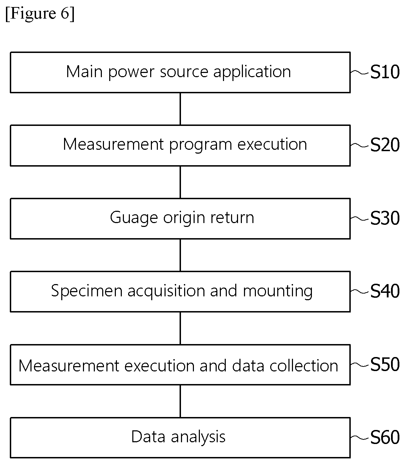

Hereinafter, the control flow of the adhesive force measuring device according to one example of the present invention will be described in detail with reference to Figure 6.

First, a main power source of the adhesive force measuring device (100) is applied (S10). The main power source may be provided in the form of a button or switch on the lower side surface of the case (10), especially the main body (11). When the main power source is applied to the main body (11), the power source may be applied to the interface screen (70) which may be turned on. Then, the adhesive force gauge (50) and the external terminal (80) may be connected via a connection line (51). The power source may be applied from the external terminal (80) to the adhesive force gauge (50) via the connection line (51), whereby the adhesive force gauge (50) may be turned on. Therefore, the power source of the adhesive force gauge (50) may be performed independently of the main power source of the adhesive force measuring device (100).

Thereafter, a measurement program may be executed (S20) on the external terminal (80). The measurement program may be software installed on the external terminal (80), and the worker may execute the measurement program on the external terminal (80).

Here, the wire may perform not only the function of transmitting data collected through the adhesive force gauge to the external terminal, but also the function in which the power source of the adhesive force gauge is applied. That is, the power source of the external terminal may be used as the power source of the adhesive force gauge.

The worker enables the adhesive force gauge (50) to return to the origin (S30) through the interface screen (70). That is, the position initialization of the adhesive force gauge (50) may be executed. Although the adhesive force gauge may have returned to the origin in the previous measurement, it is preferable to execute the position initialization of the adhesive force gauge (50) for accurate measurement (S30).

Thereafter, specimen acquisition and mounting (S40) may be performed. The mounting of the specimen may be completed by combining the clamp of the adhesive force gauge (50) located at the origin with the connection membrane. Here, specimen acquisition and mounting (S40) may be performed manually by the worker.

If the specimen acquisition and mounting (S40) is completed, the worker may command the execution of the adhesive force measurement and data collection by manipulating the interface screen (70). According to the user's command, i.e., input, the adhesive force gauge (50) pulls the connection membrane while moving linearly at a constant speed. That is, the separator is peeled off from the electrode. At this time, the adhesive force may be measured through the adhesive force gauge, and the measured data may be transmitted to the external terminal (S80) and collected (S50).

If the adhesive force gauge (50) completes movement to the end position, data collection is ended, and then the worker can execute the data analysis program of the external terminal (80) to analyze the collected data (S60).

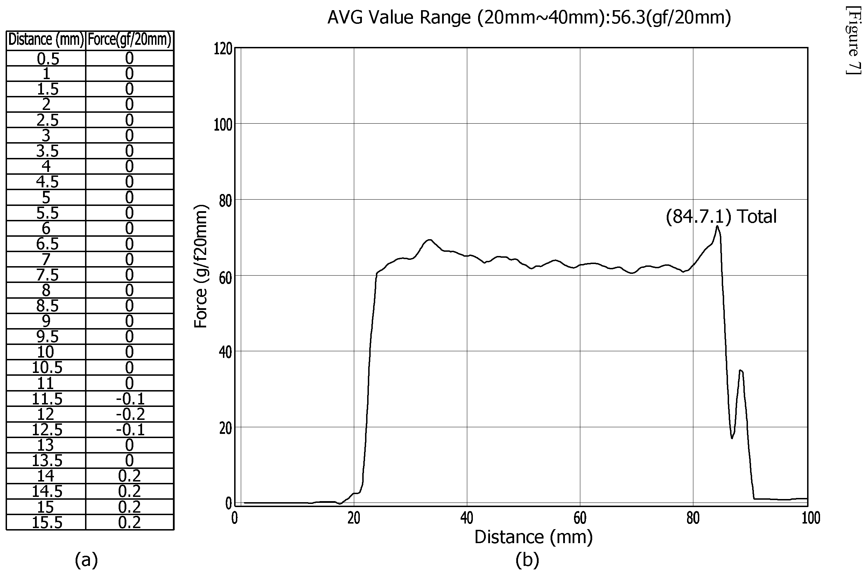

Figure 7(a) shows one example of displaying the collected data in a table. The collected data are input into the analysis program, whereby the data may be displayed in the form of a graph, as shown in Figure 7(b). The worker can check various forms of adhesive force-related values, such as the change trend of the adhesive force for each distance, the average adhesive force, and the peak adhesive force, through the displayed graph. By checking the form and measurement values of such a graph, it is possible to easily check whether the adhesive force is appropriate on site.

Here, two peak values may be formed in the graph. That is, the peak value of the moment when the separator (4) is completely peeled off from the negative electrode (2) and the peak value of the moment when the upper separator is completely peeled off from the lower separator may be formed. Therefore, according to the present example, it is possible to measure not only the bonding force strength between the separator and the electrode but also the bonding force strength between the separator and the separator.

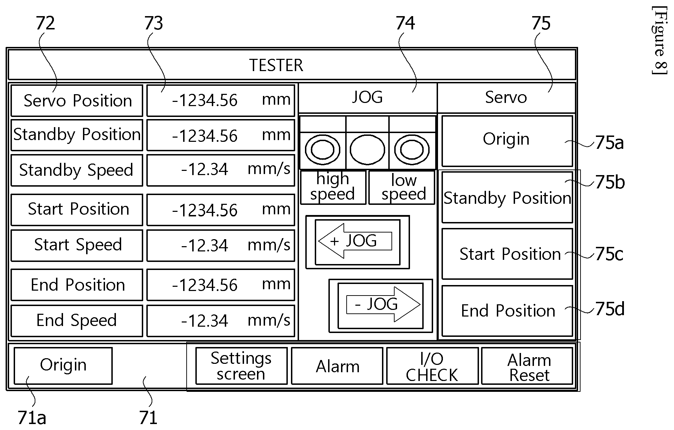

Hereinafter, with reference to Figure 8, the operation manipulation of the adhesive force measuring device through the interface screen (70) will be described in detail.

The interface screen (70) may be provided in the form of a touch screen, and the screen may be divided into a plurality of regions. As one example, a setting region (71), a position and speed distinction region (72), a position and speed display region (73), a position and display change region (74), and a servo region (75) may be provided.

The setting region (71) may be provided with an origin return menu (71a). If the worker selects the origin return menu (71a), the adhesive force gauge returns to the origin. This may be referred to as a menu for initializing the position of the adhesive force gauge before starting the adhesive force measurement. The origin may be referred to as the origin position of the servo motor, that is, the origin position of the adhesive force gauge. Then, various menus such as environment settings or alarm settings may be provided in the setting region (71).

The position and speed distinction region (72) may be referred to as a region displayed by distinguishing the position and movement speed of the adhesive force gauge. Since the movement of the adhesive force gauge is performed through driving of the servo motor, the servo position may indicate the current position of the servo motor, the standby position may be the position where the adhesive force gauge prepares for operation, and the start position may be referred to as the position where the adhesive force gauge starts moving for the adhesive force measurement. The end position may be referred to as the position where the adhesive force gauge moves and finally reaches for the adhesive force measurement.

Also, in the position and speed distinction region (72), items such as the speed that the servo motor moves to the standby position (standby speed), the speed that the servo motor starts at the start position (start speed), and the speed that the servo motor ends at the end position (end speed) may be displayed.

On one side of the position and speed distinction region (72), the position and speed display region (73) in which numerical values corresponding to the relevant position and speed items are displayed may be provided. The numerical values for the relevant position and the numerical values for the movement speed of the adhesive force gauge at the relevant position may be displayed. As the worker changes these positions and speeds, they may be set. The position may be displayed in a unit of mm, and the speed may be displayed in a unit of mm/s. The drive and speed of the servo motor correspond to the movement and speed of the adhesive force gauge, where all may be set on the premise of linear movement.

As one example, when the worker touches a menu in which numerical values are displayed, the position numerical values and the speed numerical values may be changed through the position and speed change region (74) provided on one side of the position and speed display region (73).

The servo region (75) may be provided to display the current position status of the adhesive force gauge. In addition, the servo region (75) may be provided so that the worker commands the adhesive force gauge to move to the relevant position by driving the servo motor.

If the worker inputs the origin return menu (71a) in the setting region (71), the origin menu (origin, 75a) may be activated in the servo region (75). That is, the adhesive force gauge may return to the origin while the activation is performed. Here, the activation may mean that the menu blinks or is displayed relatively brightly. If the activation is finished, the blinking may stop or the menu may be displayed darkly.

The adhesive force gauge moves to the standby position after returning to the origin, where the standby menu (standby position, 75a) may be activated in the servo region (75a). That is, the adhesive force gauge may move to the standby position while the activation is performed.

Thereafter, the adhesive force gauge moves to the start position, where the start menu (start position, 75c) may be activated in the servo region (75). That is, the adhesive force gauge may move to the start position while the activation is performed.

If the state that the adhesive force gauge has moved to the standby position is confirmed through the interface screen (70), it can be regarded that the preparation of the adhesive force measuring device for adhesive force measurement has been completed. Thereafter, the worker may prepare the specimen (90), fix the specimen (90) to the specimen seating table (60), and then combine the connection membrane to the clamp.

For data collection, first, the adhesive force gauge may be initialized. That is, by pressing "zero," the current measurement value, that is, the measurement value in the adhesive force preparation step, is corrected to be 0. Thereafter, the data collection software of the external terminal may be executed and the start of data collection may be input. Through this collection start, the external terminal receives and collects data through the adhesive force gauge.

The worker may select the end position (75d) through the interface screen (70). That is, the adhesive force gauge may be commanded to move from the start position to the end position. Through this command, the servo motor operates, whereby the adhesive force gauge (50) measures the adhesive force while moving until the end position is reached. Of course, the measured data may be transmitted to the external terminal and collected.

The above-described adhesive force measurement execution and data collection (S50) may be performed by confirming the zero point of the gauge (50), inputting the measurement start in the measurement software, and then inputting the end position (75d). Thereafter, the adhesive force gauge peels off the separator while moving linearly, and measures the adhesive force in real time to transmit it to the external terminal.

While the adhesive force gauge moves, the end position (75d) is activated, and if the movement stops, the activation is terminated. That is, the adhesive force collection is terminated. Thereafter, a user inputs the end of data collection on the external terminal. Through this, the collection of adhesive force data for the relevant specimen is terminated on the external terminal (80). The collected data are stored on the external terminal, and thereafter, it is possible to perform the data analysis after executing the analysis program and loading the collected data.

For the data analysis, setting parameters may be input. As one example, the distance range where the average value of the adhesive force is required may be set, and the scale of the x-axis corresponding to the distance axis and the scale of the y-axis corresponding to the adhesive force strength axis may be input as the parameters. Thereafter, the adhesive force graph is displayed, and the adhesive force analysis may be performed through the graph.

The adhesive force gauge itself moves linearly through the servo motor, but the adhesive force gauge itself cannot sense the position where the separator is peeled off. Therefore, the adhesive force gauge may only transmit data on the measured adhesive force strengths and measurement times to the external terminal. That is, the distance (mm) data shown in Figure 7(a) cannot be collected through the adhesive force gauge.

Therefore, the moving speed of the servo motor, that is, the start speed and the end speed, may be preset to be the same, and the speed information may be input as parameters to the data collection or analysis program of the external terminal. Since the adhesive force gauge moves at a constant speed, the product of the speed and the time may be calculated as the distance.

Here, the collection start time point of data and the movement start time point of the adhesive force gauge may not exactly coincide. The adhesive force gauge may start moving after data collection starts, or conversely, the data collection may start after the adhesive force gauge starts moving. This is because the start of data collection is performed through start input in the external terminal, and the movement start of the adhesive force gauge is performed through the end position movement input on the interface screen.

In the combination of the clamp and the connection membrane, the connection membrane may not be sufficiently tensioned. Therefore, at the movement beginning of the adhesive force gauge, the separator is peeled off only after the connection membrane is tensioned. That is, the effective adhesive force may be measured as the peeling of the separator begins.

Therefore, the distance shown in Figure 7 is approximately the movement distance of the adhesive force gauge, but does not necessarily have the same value.

The adhesive force gauge (50) outputs the measured adhesive force strengths at a preset time interval, and the output data may be input to the external terminal and recorded. Since the adhesive force gauge (50) moves at a constant speed, the position and position change of the adhesive force gauge (50) over time may be calculated, and thus the position and position change at which the separator is peeled off may be calculated.

Meanwhile, the PLC control part for driving the servo motor may be located at the lower part of the base plate (20), and the adhesive force gauge may be linearly moved back and forth as a screw stroke is operated by driving of the servo motor.

### Industrial Applicability

It is described in the Detailed Description of Invention.

## Claims

1. A portable adhesive force measuring device for measuring adhesive force of an electrode and a separator of a secondary battery, comprising:
a case in which a cover is provided and an accommodating space is formed therein;
a base plate provided inside the case and exposed to the outside in a state where the cover is opened;
a specimen seating table provided on one side of the base plate and protruding from the base plate at a predetermined height to fix a specimen for adhesive force measurement;
a linear moving table provided on the table in a straight line with the specimen seating part;
an adhesive force gauge having a clamp connected to the separator of the specimen and mounted on the linear moving table to acquire adhesive force data while moving linearly; and
an interface screen controlling movement of the linear moving table.

2. The portable adhesive force measuring device according to claim 1, comprising
a gauge seating plate that is movably provided on the linear moving table and on which the adhesive force gauge is mounted.

3. The portable adhesive force measuring device according to claim 2, **characterized in that**
the linear moving table and the specimen seating table have a protrusion height determined relative to the base plate so that the clamp of the mounted adhesive force gauge and the specimen are horizontal.

4. The portable adhesive force measuring device according to claim 2, **characterized in that**
the adhesive force gauge is linearly moved by linear movement of the gauge seating plate with respect to the linear moving table.

5. The portable adhesive force measuring device according to claim 4, **characterized in that**
the adhesive force gauge is provided to output adhesive force strengths measured at a preset time interval.

6. The portable adhesive force measuring device according to claim 5, **characterized in that**
the data output from the adhesive force gauge are transmitted to an external terminal via a connection line.

7. The portable adhesive force measuring device according to claim 1, **characterized in that**
on the interface screen,
an origin movement menu of the adhesive force gauge;
a start position menu indicating that the adhesive force gauge is at a start position; and
an end position menu indicating that the adhesive force measuring device moves to be at an end position where it ends measurement are displayed.

8. The portable adhesive force measuring device according to claim 7, **characterized in that**
when the origin movement menu is input, the adhesive force gauge is moved to an origin position.

9. The portable adhesive force measuring device according to claim 8, **characterized in that**
the adhesive force gauge is moved to the origin position, and then sequentially moved to a standby position and the start position.

10. The portable adhesive force measuring device according to claim 9, **characterized in that**
when the end position menu is input after the adhesive force gauge is moved to the start position, the adhesive force gauge moves linearly at a constant speed to the end position.

11. A portable adhesive force measurement system for measuring adhesive force of an electrode and a separator of a secondary battery, comprising:
a case in which a cover is provided and an accommodating space is formed therein;
a base plate provided inside the case and exposed to the outside in a state where the cover is opened;
a specimen seating table provided on one side of the base plate and protruding from the base plate at a predetermined height to fix a specimen for adhesive force measurement;
a linear moving table provided on the table in a straight line with the specimen seating part;
an adhesive force gauge having a clamp connected to the separator of the specimen and mounted on the linear moving table to acquire adhesive force data while moving linearly;
an interface screen controlling movement of the linear moving table; and
an external terminal connected to the adhesive force gauge for communication and provided so that adhesive force data output from the adhesive force gauge are collected and analyzed.

12. The portable adhesive force measurement system according to claim 11, **characterized in that**
the adhesive force gauge and the external terminal are connected via a connection line.

13. The portable adhesive force measurement system according to claim 12, **characterized by**
comprising a gauge seating table that is provided on the linear moving table to be linearly movable and on which the adhesive force gauge is mounted, and
comprising a servo motor driven for back-and-forth linear movement of the gauge seating table at one end of the linear moving table.

14. The portable adhesive force measurement system according to claim 12, **characterized in that**
a PLC control part for control and power source application of the servo motor and the interface screen is located at the lower part of the base plate.

15. The portable adhesive force measurement system according to claim 14, **characterized in that**
the adhesive force gauge receives a power source from the external terminal through the connection line.

16. The portable adhesive force measurement system according to claim 14, **characterized in that**
the servo motor is driven so that the gauge seating table linearly moves at a preset constant speed, and
the adhesive force gauge is provided to output adhesive force strengths measured at a preset time interval.

17. The portable adhesive force measurement system according to claim 12, **characterized in that**
the external terminal is a tablet PC, and a seating protrusion, in which the external terminal can be supported in a state where the cover is completely opened, is formed on the cover.

18. The portable adhesive force measurement system according to claim 12, **characterized in that**
after inputting execution of adhesive force collection software installed on the external terminal and data collection start, the data are recorded in the external terminal.

19. The portable adhesive force measurement system according to claim 18, **characterized in that**
after inputting data collection end of the adhesive force collection software installed on the external terminal, the data recording is ended in the external terminal.

20. The portable adhesive force measurement system according to claim 12, **characterized in that**
a graph of the adhesive force strengths for the location of the separator is generated and displayed based on the collected data through execution of adhesive force analysis software installed on the external terminal.
